# EUROPEAN PATENT SPECIFICATION

(11) **EP 3 388 321 B1**
(45) Date of publication and mention of the grant of the patent: **21.02.2024**
(21) Application number: 18425026.4
(22) Date of filing: 11.04.2018
(51) Int. Cl.: B62K 21/06, B62K 19/32

(54) **DEVICE FOR THE CONTINUOUS VARIATION OF THE STEERING ANGLE IN A MOTORCYCLE OR SIMILAR**
VORRICHTUNG ZUR KONTINUIERLICHEN VARIATION DES LENKWINKELS AN EINEM MOTORRAD ODER ÄHNLICHEM
DISPOSITIF POUR LA VARIATION CONTINUE DE L'ANGLE DE CHASSE DANS UNE MOTOCYCLETTE OU SIMILAIRE

(30) Priority: 13.04.2017 IT 201700041229
(43) Date of publication of application: 17.10.2018
(73) Proprietor: Bonanni, Paride, 67100 L'Aquila (IT)
(72) Inventor: Bonanni, Paride, 67100 L'Aquila (IT)

(56) References cited:
- EP-A2- 0 800 986
- DE-A1- 19 607 434
- DE-A1-102011 086 127
- GB-A- 1 412 509
- US-A1- 2002 020 985
- US-A1- 2006 113 745

## Description

The following description relates to a device which allows for a continuous variation of the inclination of the steering angle in a motorcycle or similar, comprising a steering pin which can rotate freely inside a steering tube integral with a frame. This pin is connected to handlebars where the main controls are available to the pilot and, by means of an upper plate (or steering head) and a lower plate (or steering base), to a suspension system which the front wheel and the braking system are connected to. The device which is the object of the present invention allows for the modification of the relative angle of inclination between the axis of the steering tube and the axis of rotation of the steering pin. This modification allows one to vary the steering angle of the motorcycle and consequently the value of the trail (or fore-travel, "avancorsa" in Italian), according to the preamble of the main claim.

Document GB1412509 A discloses a device according to the preamble of claim 1.

The dynamic behavior of a motorcycle depends upon many factors. The same motorcycle will have driving characteristics that vary, for example, by changing the tyres or even just their compound, or by modifying the suspension settings. The stability of the vehicle, its handling and driving comfort, are characteristics which are usually in contrast with each other. Thus forces the designer to prefer one at the expense of the other or to search for the best compromise according to the use of the motorcycle. In order to obtain the desired set-up you need to focus on a few significant parameters which depend on mass (weight of the motorcycle, its distribution between front and rear axle, position of the center of gravity) and on geometry (transfer angle of the load, angle of chain traction, wheelbase, trail, etc.).

The trail ("avancorsa" in Italian) is the distance between the point of intersection of the steering axis with the ground and the point of contact of the front wheel with the road surface. It follows that this distance depends mainly, but not exclusively, on the inclination of the rotation axis of the steering pin, called steering axis. All other factors equal, it can be said that a high steering angle will result in a high trail, which gives the bike good directionality and good stability at the expense of maneuverability. This happens vice versa with a low steering angle. This is because the trail, or more precisely its projection perpendicular to the steering axis (called normal trail or mechanical trail), is the arm of the friction forces between the wheel and the ground. These forces determine the so-called righting moment which opposes the rotation of the wheel around the steering axis and which is transmitted from the front wheel to the suspension system up to the handlebars. The righting moment is one of the main factors in the response of the front part of the motorcycle to the pilot's commands. It is quite evident that the lower the trail, the lower the righting moment, and the better the handling.

Especially in the field of sports competitions, even if not exclusively so, in order to manage the issues concerning the steering angle the inclination of the steering axis is modified, trying to do so with a limited number of operations and in the shortest time possible. One of the best known systems makes use of eccentric bushings allowing for an inclined positioning of the steering pin with respect to the axis of the steering tube. These bushings can be mounted on the steering tube or on the steering plates, and their replacement allows one to change the angle of the steering axis. This operation is, however, laborious because for each value of the inclination of the steering pin a specific pair of bushings must be adopted with at least partial dismantling of the steering group. Moreover, the relative positioning between the various components may be difficult and imprecise, therefore the operation aside from being complex is also expensive in terms of time.

Other solutions consist in the replacement of the entire steering group, and, in some cases, even the replacement of the steering tube which is made as a separate body to be coupled with the frame. However, this involves the same disadvantages, at times even worse, of the eccentric bushings solution described above. Further solutions consist in the construction of a steering tube hinged to the frame which perhaps can also allow for an adjustment in a short time, but this system involves the use of a large number of components with an excessive increase in weight and a likely problem of reliability in time.

Reliability in time is the negative side of another well-known solution, which provides the adjustment of the steering axis by means of a screw that acts on the steering pin. Maintaining adjustments in time can be difficult due to small movements between the parts or vibrations that are generated during the use of the motorcycle. Other very laborious solutions consist in the insertion of bearings in the steering plates and the placement of the steering pin on spherical hinges or sliding curved plates. Other solutions are not very complex, but allow for the inclination of the steering axis in a discrete number of positions, generally a couple, which might not necessarily correspond to an ideal regulation. Further solutions only modify the angle of inclination of the suspension system, but not of the steering axis, so that in any case a different trail is obtained, but without having obtained an improved sensitivity of the wheel and of the relationship between the steering angle and curvature angle followed by the wheel itself. The purpose of the present invention is to reduce, as much as possible, all the disadvantages described above by providing a very simple device which has, however, a high regulation sensitivity. This device is built in order to allows for a continuous variation of the inclination of the steering axis on the longitudinal plane Y of the motorcycle. In this way, it is possible to reach the optimal position desired with very few operations, also minimizing the time necessary to perform such operations. Another important characteristic is that of having a device made up of few additional components. This allows, on the one hand to limit weight increase as much as possible compared to traditional solutions, and on the other hand to have an easy and intuitive management system. Last but not least is the versatility aspect which allows for both adaptation to existing motorcycle models as well as applicability to new models.

Considering a motorcycle, the classic configuration of the most common steering group currently used comprises a steering pin that can rotate freely inside a steering tube through the decoupling components of the motion (usually two bearings). The steering tube is welded to the frame or forged directly into its body of melting and within the steering tube two bearings are positioned, inside which the steering pin is housed. The steering plates are fixed to the steering pin. On the steering plates the handlebars, with the controls needed by the pilot, and the front fork (or in general a front suspension system) will be positioned. On the suspension system the wheel and the braking system will be mounted.

The invention is defined by independent claim 1 and preferred embodiments by the dependent claims.

The concept underlying the present device is that it allows (only during the adjustment phase) the relative movement between axis C of the steering tube and axis B of the steering pin in order to vary their mutual inclination, notwithstanding that they both remain on the longitudinal plane Y of the motorcycle. In particular, axis C of the steering tube will always remain fixed, while axis B of the steering pin (and of the bearings) will undergo rotations taking it from an initial position, which for example we can suppose coincides with C, to a final position with a value of the desired angle of inclination. To carry out these rotations at least one other axis will be used, an auxiliary axis A, which is inclined in relation to axis C. To better understand the functioning geometry of the device, consider a sphere of any radius and in it, its center O. Also consider two vertical diametrical planes, perpendicular to each other, which divide the sphere into 4 equal segments. For clarity the two planes will be called longitudinal plane Y and transversal plane X. The intersection between these two planes is a straight line (passing through the center O) which will be called central rotation axis. Initially, we hypothesize axis C of the steering tube and axis B of the bearings coinciding with each other and coinciding with the central rotation axis. We may now consider another axis lying on the transversal plane X, which we will call auxiliary rotation axis A, inclined by any angle "α" in relation to the central rotation axis and which intersects it in the center O of the sphere. It follows that, by construction, all three axes A, B and C pass through the center O of the sphere and lie on the transversal plane X; the axes B and C also lie in the longitudinal plane Y. We also hypothesize that the auxiliary rotation axis A and axis B of the bearings are permanently locked in their mutual position, while axis C and axis B will not be.

To carry out the variation of the inclination of axis B in relation to axis C, initially hypothesized as null, two rotations can be made. In the first, axis B is rotated around auxiliary rotation axis A, for example by an angle with a value equal to "ε". The displacement that axis B undergoes is the same that would be undergone by the generatrix of a double cone with a vertex in the center O of the sphere, and a rotation axis coinciding with auxiliary rotation axis A. In this way, axis B will be inclined by a certain angle "β" with respect to axis C and will lie on another vertical diametrical plane R which will form an angle "γ" with respect to the longitudinal plane Y of the sphere. The angle of the axis B with respect to the auxiliary rotation axis A always remains equal to "α". Thanks to the geometrical construction used, it can easily be deduced that the relation γ = ε / 2 is valid, in absolute value. At this point it is necessary to bring axis B back to the longitudinal Y plane, and this is obtained by carrying out a second rotation of the whole system, in the opposite direction to the first one, around the central rotation axis, for a value exactly equal to "γ". In this way, plane R will coincide with the longitudinal plane Y, and the result of this will be that we will again have the axis B lying in the longitudinal plane Y, but inclined with respect to the axis C of the steering tube by an angle "β". The second rotation performed can be concordant or discordant with the first; the solution of two rotations in opposite directions is to be preferred for brevity and convenience. The center O of the sphere and the axis C of the steering tube are the only geometric entities that do not undergo any kind of displacement. Moreover, considering the two hemispheres generated by a horizontal diametrical plane, everything that happens in the upper hemisphere takes place in the same way, but reversed, in the lower hemisphere. From all this derives an extremely positive aspect, namely that when the initial angle "α" is fixed, the inclination of the axis B can be varied from an initial position coinciding with the axis C, to a final position that sees an angle between the axes B and C with a value ranging from + 2α to -2α. These two extreme values can be reached by making a first rotation of an angle equal to 180 degrees. In other words, the variation interval of the inclination of axis B is equal to 4 times the value of inclination of the auxiliary axis A in relation to axis C, and this allows for a high adjustment range, keeping the dimensions of the steering group limited.

The system object of the present patent allows one to replicate the sequence of operations described above and to obtain the variation of the inclination of the steering pin in relation to the axis of the steering tube, without having to remove any element of the steering tube itself.

This result will be evident to the expert in this field. Considering the classic construction of the steering group, the bearings constitute the intermediate element between the steering tube and the steering pin. Instead, in the device object of this patent application, the means of containment of the bearings and of the steering pin have been inserted. These means of containment allow for the physical decoupling of axis C of the steering tube and of axis B of the steering pin. The present invention can be better understood by observing the attached figures which are provided as an example that is non-limiting.
Figures 1 and 2 represent two sections of the steering group according to the lines of section A-A and B-B indicated in fig. 3.
Fig. 3 shows a top view, according to the section line C-C of fig.1.

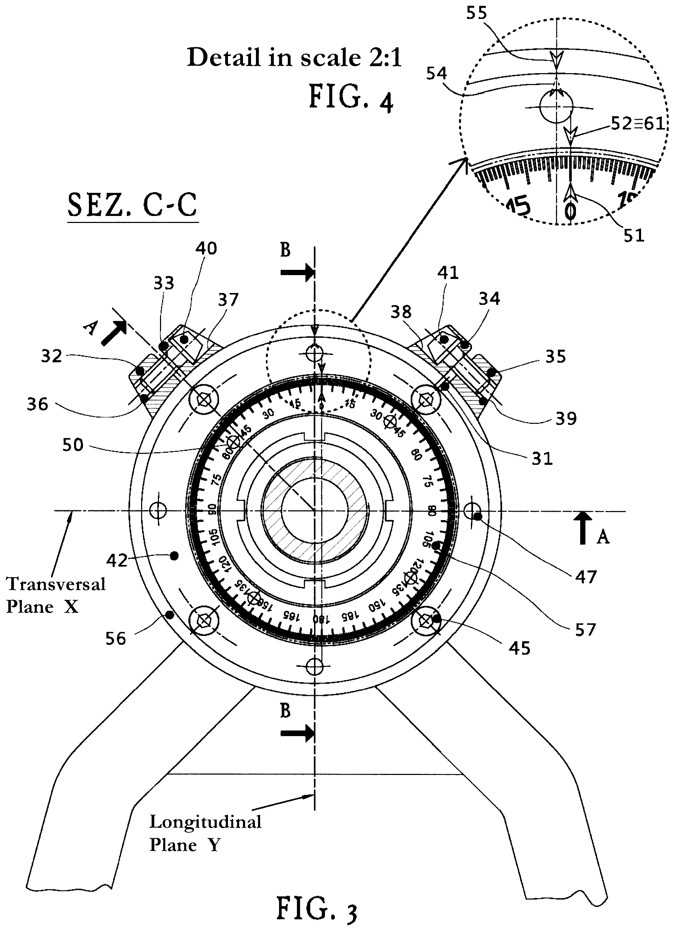

Fig. 4 represents a detail in enlarged scale of some reference notches, necessary to position the system in a pre-established reference configuration, a sort of zero position from which to start to carry out the desired adjustments. In this position the axes B of the steering pin and C of the steering tube coincide, and are simultaneously on a longitudinal plane Y and on a transversal plane X, as indicated in figures from 1 to 3. Consider also an auxiliary axis A, lying only on the transversal plane X, inclined by an angle "α" with respect to axes B and C and such as to intersect them at a point O belonging to a plane S (plane S is the median horizontal plane of the steering tube).
Fig. 5 shows a part of the system in a side view, partially in section, in which the elements, which will be described subsequently, necessary for the final repositioning of the steering group at the end of the regulation phase are highlighted. All figures from 1 to 5 describe the device in the zero position cited above.
Figures 6, 7 and 8 show three possible configurations of the system when the position of the intersection point O of the axes is changed in relation to the center of the front wheel C_{R}, keeping the center of rotation of the rear wheel C_{RP} fixed.

With reference to the aforementioned figures, a motorcycle comprises a supporting frame 1, to whose front end a steering tube 2, having a symmetry axis C, is associated. On the upper surface 56 of the steering tube a reference notch 55 is engraved, which serves to indicate the trace of the longitudinal plane Y of the motorcycle on the steering tube itself.

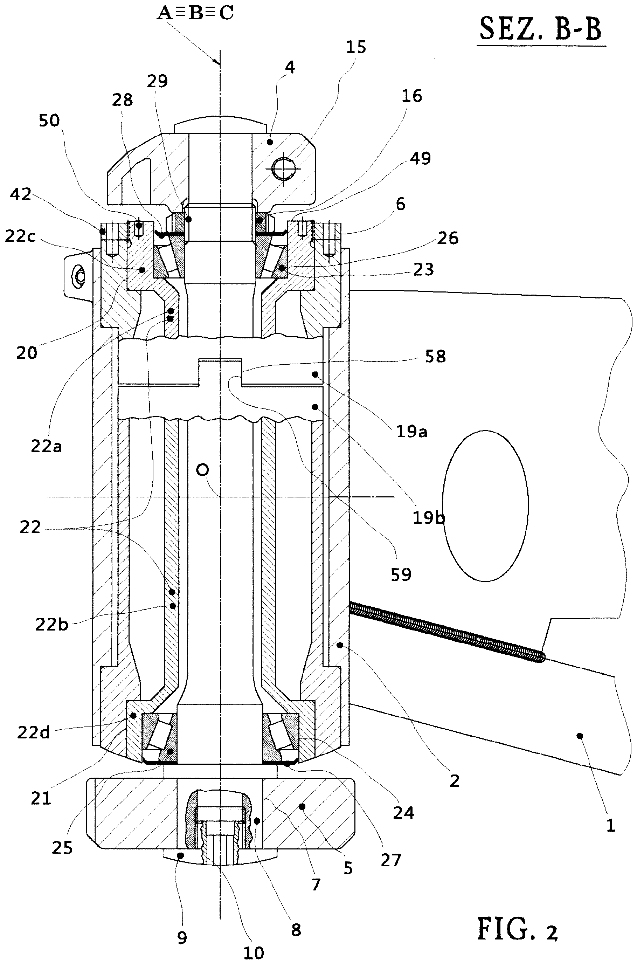

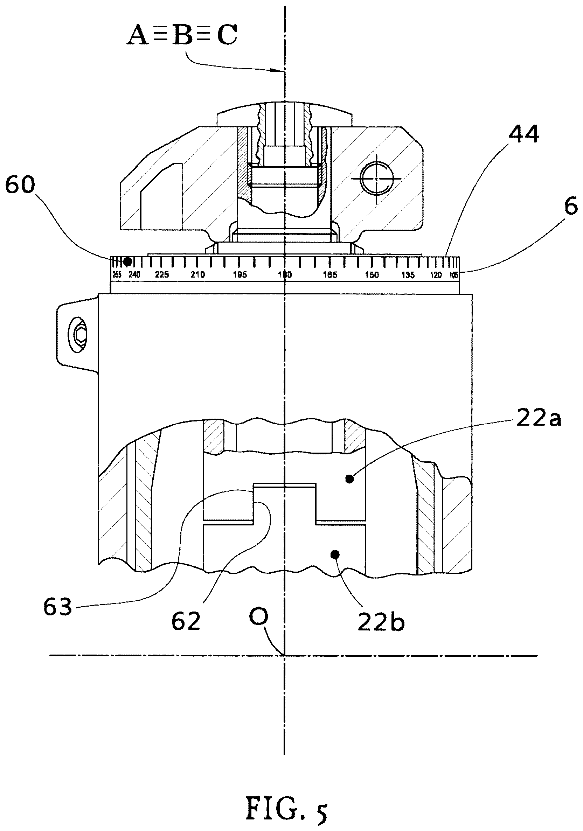

Inside the steering tube, two cylindrical surfaces 17 and 18 are obtained, housing two flanges 19c and 19d located at the upper and lower ends of a first means of containment 19, which will be called external means of containment. These flanges have an external axis of symmetry coinciding with axis C of the steering tube. To allow for its assembly, body 19 is constructed in two parts, indicated in fig. 2 as 19a and 19b. These two parts are built so as to be integral, in relation to a rotation movement around axis C, through a "coupling of shape" 58 and 59, or a functionally equivalent connection. This coupling is not to be carried out with interference, but with the minimum mechanical interplay necessary for assembly, which does not, however, allow for relative rotations between the parts during the system regulation phase. On the upper surface 53 of means of containment 19, we have notch 54 which, in the previously mentioned zero position, corresponds to notch 55 of the steering tube 2. Instead, inside containment means 19, two surfaces 20 and 21 have been created having, as axis of symmetry, auxiliary axis A which is inclined with respect to axis C of the steering tube by a value "α", chosen by the designer. Within the surfaces 20 and 21 two new flanges 22c and 22d are housed, having an axis of symmetry of the external surfaces coinciding with auxiliary axis A, and being part of a second containment means 22, which will be called internal means of containment. Means of containment 22 is made up of two parts 22a and 22b, which fit together by means of surfaces 62 and 63 of fig 5, for the same reasons and using the same constructive realization as means of containment 19. Within the flanges of containment means 22 two surfaces 23 and 24 are formed, with axis of symmetry coinciding with the axis C of the steering tube, in which the bearings, or functionally equivalent mechanical decoupling elements, will be positioned to allow for the relative rotation between the internal means of containment 22 and the steering pin 3, so as to enable the steering maneuver of the front wheel, (not shown in the attached figures). The correct value of the mechanical interplay necessary for the rotation of the bearings is adjusted by means of a ring nut 16, which is screwed on the threaded part 29 of the steering pin 3. For external protection of the bearings there are sealing rings 27 and 28, or dust covers or similar elements. On the upper surface 49 of containment means 22 a series of blind holes 50 are made, which allow for the application of a hook type wrench used to carry out the rotation of the means of containment 22 during the adjustment phase; on surface 49, a graduated scale 57 is also engraved (by incision or similar machining) which indicates the rotation angle of the means of containment 22 with respect to the zero position of reference. In correspondence with the angle 0 (zero) of the graduated scale there is a notch 51, which will correspond to another reference notch 52 made on the upper surface 53 of means of containment 19, in the condition in which the axes B and C are simultaneously on the transversal plane X and on the longitudinal plane Y.

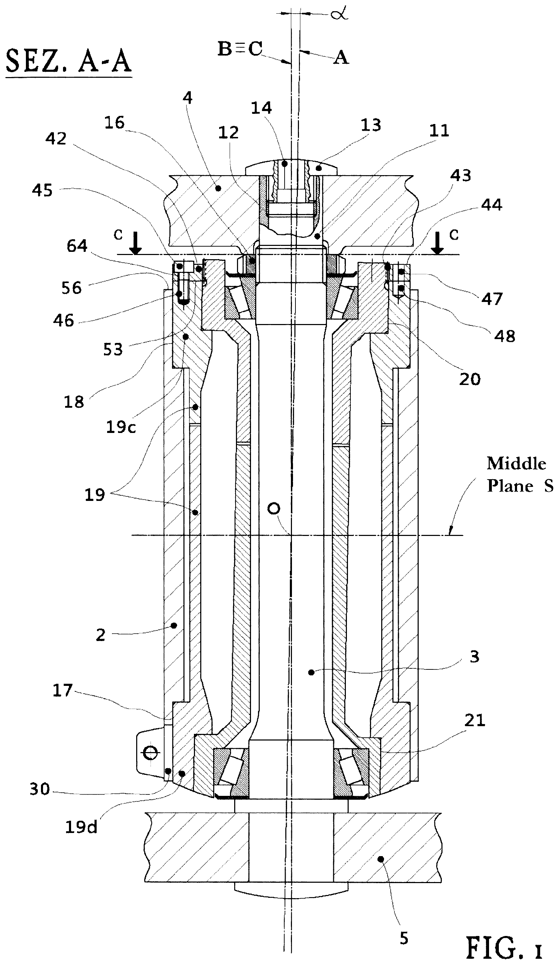

Mounted internally to the bearings, a steering pin 3 can freely rotate around its own axis B. The axes B and C in figs. 1-5 are coincident. The top part of the steering pin is connected to classic handlebars (not shown) by means of a steering plate or steering head 4, while the bottom part is connected to a lower steering plate or steering base 5. A front suspension system (not shown in the figures) is connected to the two steering plates. In the upper part 11 of the steering pin 3 a surface 12, formed in the steering head 4, is housed. This steering head is in turn locked on ring nut 16 using a cambered head threaded screw 13 with a recessed hexagon socket 14 (or equivalent element of connection) and another locking screw 15, which tightens the steering head 4 on the steering pin 3. Inside the steering base 5 a surface 7 is formed, in which the lower part 8 of the steering pin is housed; this coupling is locked by a cambered head threaded screw 9 with recessed hexagon socket 10, or an equivalent connecting element.

In the normal operation of a motorcycle, the steering tube 2 and the two means of containment 19 and 22 are locked in their mutual position with no possibility of relative movement. For this purpose, two different locking systems are present in the device, one between the steering tube 2 and the containment means 19 and one between the two means of containment 19 and 22. With regard to the first locking system, on the steering tube (at its ends, and therefore in correspondence of the surfaces 17 and 18), two vertical slits 30 and 31 are made, and on their sides there are some protruding winglets 32, 33, 34 and 35, external to the steering tube 2. In the winglets, some seats 36, 37, 38 and 39 are formed. For each pair of winglets at least one of the seats is threaded (36 and 39 in fig. 3). Two screws 40 and 41 (or equivalent connecting parts) will be inserted into the seats, and will be used to tighten the winglets resulting in surfaces 17 and 18 tightening around flanges 19c and 19d, in order to prevent the relative movement of body 19 in steering tube 2.

The relative motion between the two containment means 19 and 22 is prevented, instead, by a third element 42, said means of locking. Within means of locking 42, in an eccentric position and inclined by an angle equal to "α", a thru-hole of suitable diameter is made, and inside this hole a serration splines machining 43 ( "lavorazione millerighe" in Italian, DIN 5481) or a connection for an equivalent disassembling shape coupling is carried out. This machining 43 allows for rigid coupling with an identical negative machining carried out in the upper flange 22c of the containment means 22. Means of locking 42 has on its upper surface 44 a series of seats 64 in which screws 45, or similar connecting elements, will be housed. These screws 45 will be inserted into the threaded holes 46 made in the upper flange 19c of the external containment means 19. Furthermore, on surface 44 of means of locking 42 another series of thru-holes 47 is made, so as to be in correspondence with the blind holes 48 made in the upper flange 19c of means of containment 19. Holes 47 and 48 will be needed for a hook type wrench used for the simultaneous rotation of the components 19, 22 and 42 during the adjustment phase. In this phase it will be useful to resort to another graduated scale 60 made on the lateral surface 6 of means of locking 42, with zero at notch 54. Always on surface 44 a notch 61 is engraved, which replicates the reference notch 52 of containment means 19 in height. Supposing that we are using a motorcycle now and, to simplify the concept, we imagine that the various components of the steering group are initially in the zero position previously described (which is not a necessary condition). We will see therefore that the winglets of the steering tube 32, 33, 34 and 35 are tightened and that means of locking 42 is mounted on means of containment 19 and 22 and stopped by screws 45. Axis B of the steering pin and axis C of the steering tube coincide with each other and they both lie simultaneously on the transversal plane X and on the longitudinal plane Y. Instead, auxiliary axis A lies only on the transversal plane X and is inclined with respect to axes B and C by an angle equal to "α", intersecting them at the point O. Notches 54 and 55 correspond to each other, as do notches 51, 52 and 61. The system of the steering tube and of the containment means, in the configuration just described, behaves as a single body, and the only movement allowed in the steering group is that of rotation of the steering pin inside the bearings, namely that of steering motion in normal use of the motorcycle. Now suppose we want to modify the trail and therefore we want to change the relative angle of inclination between axes B and C, bringing it to a whatever desired value β, in the interval [+ 2α, -2α]. Initially, it is necessary to raise the motorcycle with a stand which lifts the front wheel, but does not in any way constrain the movements of the suspension system, after which it is necessary to access the upper part of the steering tube. By removing screw 13 and by loosening screw 15 and the screws which lock the steering head on the suspension system (this latter connection is not shown, but is known to the expert in the field), the steering head 4 can be removed, thus uncovering the three components 19, 22 and 42. These components and the steering tube are now mutually blocked. To make them mobile, it is necessary to act on the two blocking systems mentioned above, namely it is necessary to loosen screws 40 and 41 so that the steering tube 2 can expand in a known manner to allow body 19 to rotate and completely unscrew screws 45 in order to remove means of locking 42. Finally, it is necessary to slightly unscrew, and only one turn is sufficient, ring nut 16 in such a way that containment means 19 and 22 acquire axial mechanical interplay on the mounting surfaces, respectively 17 and 18, and 20 and 21. Once all this is done, means of containment 19 can rotate freely around axis C and means of containment 22 around axis A. Now, inserting a hook type wrench into holes 50, a rotation "ε" is applied to means of containment 22, which generates a rotation movement of axis B around the auxiliary axis A, until reaching the new value "β" inclination of axis B with respect to axis C. The values that the "β" angle can assume within its variation range are univocally determined by the values of the angle "ε" applied in the rotation of containment means 22, taking into account the sign deriving from the direction of rotation. The value of the angle "ε" can be measured using a graduated scale 57 in relation to notch 52 of containment means 19. This notch 52 is now visible since means of locking 42 has been removed. Once this first rotation is completed, the two means of containment 19 and 22 are to be rendered integral again, by re-inserting locking body 42, so that the notches 52 and 61 correspond again, and by re-tightening the screws 45. At this moment the holes 47 of locking means 42 are again in correspondence with the blind holes 48 of containment means 19. Axis B is inclined at an angle β in relation to axis C and is still coplanar with it, but on a new vertical plane R, which forms an angle "γ" in relation to the longitudinal plane Y. To bring axis B back to the longitudinal plane Y, a second rotation must be applied to the assembly of the components 19-22-42, using another hook type wrench to be inserted into the pairs of holes 47-48. This rotation, in the opposite direction of the first and for a value exactly equal to "γ", leads to making plane R and longitudinal plane Y coincide, thus obtaining that axis B will again lie on the longitudinal plane Y, but inclined at an angle "β" with respect to the axis C. To carry out this second rotation with precision, the graduated scale 60 made on the lateral surface 6 of means of locking 42 is used, measuring the angle applied with respect to reference notch 55. At this point, it is possible again to lock all the components of the device by screwing ring nut 16 so as to have the tightening interplay for the correct operation of the bearings 25 and 26, then tightening the pairs of external winglets of the steering tube through screws 40 and 41, and finally by reinserting the steering head 4 and locking it again with screws 13 and 15. It should be specified that the two rotations do not necessarily have to be performed in the opposite direction, although this is surely the least expensive solution in terms of time. The second rotation can also have a concordant direction with the first, but in this case the assembly of the containment means must be rotated at an angle equal to 360 °- γ. In the sequence of operations just described, it can be seen that the only parameters that can be chosen are the value of angle "α" and the position of the point O of intersection of axes A, B and C in the design phase, and the value of angle "β" in the regulation phase. The value of angle "ε" of the first rotation depends only on the value of angle "β" to be reached, while the value of angle "γ" of the second rotation is exactly equal to half of the value of angle "ε" previously applied, except for the direction of rotation.

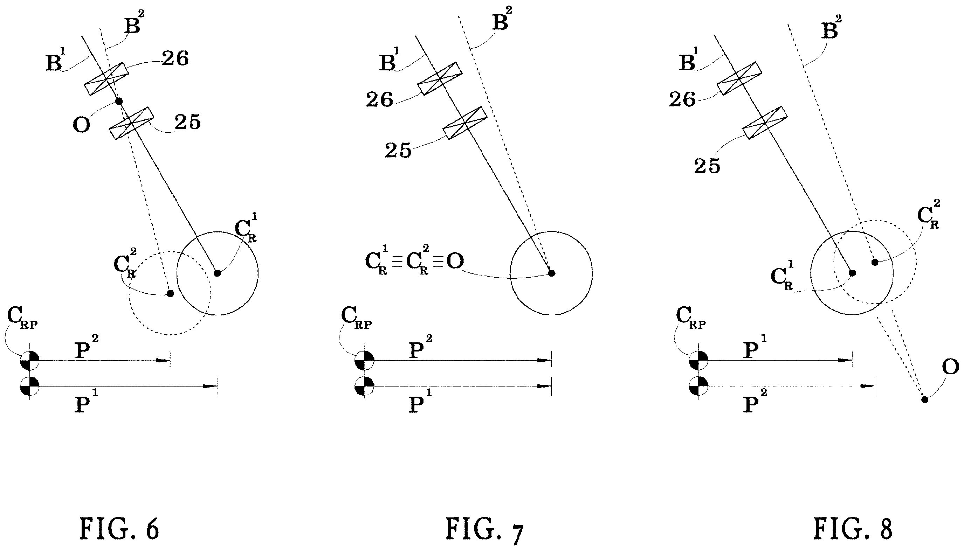

The description above regards a particular solution of the device which is the object of the patent. This device allows one to vary the relative inclination angle between the axis of the steering tube C and that of the steering pin B, by two successive rotations (concordant or discordant) of the various components around the two axes incident in central point O of the median plane S of the steering tube. However, other solutions are also possible which may use a different number of containment means, rotations around slanted axes ("assi sghembi" in Italian), mechanical decoupling systems different from bearings (bushings or spherical hinges), or a center of rotation O not necessarily belonging to the median plane of the steering tube. These other solutions are to be considered included in this patent application. Particularly interesting is the study on the effects of the position of point O along the steering axis with respect to the center of rotation of the front wheel C_{R} (considering the center of rotation of the rear wheel C_{RP} fixed). This study is illustrated in figures 6-8, assuming a null offset value (the offset is a parameter known to the expert in the field). In the configuration described so far, corresponding to fig. 6, this point O is above point C_{R}. It is evident that the application of an angle "β" which decreases the steering angle, simultaneously generates a decrease in the wheelbase of the motorcycle. Similarly, an angle "β" that increases the steering angle, also creates an increase of the wheelbase. The ratio between the change of the steering angle and the change of the wheelbase is proportional to the distance of the center of rotation O from the center of rotation of the front wheel C_{R}. The case is different when, as can be seen in fig.7, points O and C_{R} coincide. In this situation, any variation of the steering angle does not generate changes in the wheelbase, precisely because the center of the wheel is also an intersection point for the axes around which the rotations of the containment means of the steering group occur. The last case is that of fig. 8, which gives opposite results from the case of fig. 6. In fact, if the rotation center O is below the center of the front wheel C_{R}, an increase of the steering angle generates a decrease of the wheelbase and, conversely, a decrease of the steering angle generates an increase of the wheelbase. All these variants are to be considered as falling within the scope of the present patent, as long as they comply with claim 1.

## Claims

1. A device for modifying the inclination of the steering axis (B) of a motorcycle or similar, the device comprising a steering pin (3) configured to be located within a steering tube (2) integral with a frame (1) of the motorcycle or similar, with said device in use being part of a steering group, the latter also comprising handlebars connected in use to the steering pin (3), a steering head (4), a steering base (5) and any known type of suspension system connected to a front wheel, wherein said device comprises at least two means of containment (19, 22) of said steering pin (3), which are able to move in the steering tube (2) so as to vary their reciprocal position allowing a variation of the inclination of the steering pin axis (B), and wherein said device further comprises means of locking (42) of the aforementioned means of containment (19,22), **characterized in that** the means of containment (19,22) vary their reciprocal position continuously in infinite ways allowing for a continuous variation in infinite values of the inclination of the steering pin axis (B), through a succession of single rotations of each said means of containment (19, 22), or through a combination of such rotations, around axes (A, C) not parallel to the steering pin axis (B) at the moment in which each single rotation, or their combination, is carried out, considering moreover that said rotations may be concordant or discordant to each other in terms of direction.

2. A device according to claim 1, **characterized by** the fact that the axes (A, C), around which the rotations of said means of containment (19, 22) or the combinations of said rotations are carried out, are incident with the axis (B) of the steering pin (3) in the same point (O).

3. A device according to claims 1 or 2, **characterized by** the fact that the means of containment (19, 22) are internally hollow cylindrical bodies, suitable for insertion inside the steering tube (2) and that said means of containment are positioned one inside another.

4. A device according to claim 3, **characterized by** the fact that the means of containment (19,22) have flanges (19c, 19d, 22c, 22d) at their extremities, and said flanges are made in order that, considering each singularly, the surfaces formed within (20, 21, 23, 24) have an axis of symmetry which is inclined in relation to the axis of symmetry of the external surfaces of the flanges themselves, and also in relation to the axis of symmetry of the means of containment in which said internal surfaces are formed.

5. A device according to claims 3 or 4, **characterized by** the fact that the most internal means of containment (22) has seats (23, 24) for the housing of mechanical uncoupling elements (25, 26) which allow the steering pin to rotate freely (3), with said uncoupling systems protected by sealing elements (27, 28).

6. A device according to any of the previous claims, **characterized by** the fact that the means of containment used are two in number (19, 22), and that at least one of these said means of containment is built in two parts apt at collaborating with each other so as to be integral with respect to a rotation movement.

7. A device according to claim 6, **characterized by** the fact that the flanges (19c, 19d) of the external means of containment (19) collaborate externally with the internal surface of the steering tube (2) and internally with the external surface of the flanges (22c, 22d) of the internal means of containment (22), with said external means of containment including a series of cavities (46) suitable for carrying out a rigid connection with the means of locking (42).

8. A device according to claim 7, **characterized by** the fact that the cavities (46) of the external means of containment (19) for a rigid connection of said means of containment with means of locking (42) consist of threaded holes.

9. A device according to any claims from 6 to 8, **characterized by** the fact that the internal means of containment (22) includes a type of machining (43) to make it suitable for a shape coupling with the means of locking (42), a series of cavities (50) allowing for the application of an instrument able to facilitate the execution of a rotation movement of said internal means of containment, and a means of measurement (57) apt to evaluate said rotation movement of said internal means of containment.

10. A device according to claim 9, **characterized by** the fact that the type of machining (43) to make it suitable for a shape coupling with the means of locking (42) is serration splines machining, that a series of cavities (50) allowing for the application of an instrument able to facilitate the execution of a rotation movement of the internal means of containment consists of holes, and that the means of measurement suitable for evaluating such rotation consists of a graduated scale (57), with said graduated scale being suitable for collaborating with a reference element (52) which is situated on the external means of containment (19).

11. A device according to any of the previous claims, **characterized by** the fact that said means of locking (42) includes a series of cavities (64) for a rigid connection with the most external means of containment, an internal machining (43) suitable for allowing shape coupling with the most internal means of containment (22), a series of cavities (47) for the application of an instrument suitable for facilitating the execution of a rotation movement of said means of locking, and a means of measurement (60) suitable for evaluating said rotation of said means of locking (42).

12. A device according to claim 11, **characterized by** the fact that the series of cavities (64) for a rigid connection with the most external means of containment (19) are holes that serve as seats for the elements of connection (45), that the internal machining (43) carried out to allow for the shape coupling with the most internal means of containment (22) consists in serration splines machining, that the series of cavities (47) for the application of the instrument suitable for facilitating the rotation of said means of locking consists of holes, and that the means of measurement of said rotation of said means of locking (42) is a graduated scale (60), with said graduated scale being suitable for collaborating with a reference element (55) which is situated on the steering tube (2).

13. A device according to claim 12, **characterized by** the fact that the elements of connection (45) between the most external means of containment (19) and the means of locking (42) are threaded screws.

## Patentansprüche

1. Vorrichtung zur Veränderung der Neigung des Lenkstiftachse (B) an einem Motorrad oder ähnlichem, wobei die genannt Vorrichtung einen Lenkstift (3) umfasst, der in einem Steuerrohr (2) angeordnet ist, das fest mit einem Rahmen (1) des Motorrads oder ähnlichem, wobei die genannt Vorrichtung Teil einer Lenkeinheit ist, wobei letztere außerdem einen Lenker umfasst, der im Betrieb mit dem Lenkstift (3) verbunden ist, ein Lenk Köpf(4), eine Lenkbasis (5), und jede bekannte Art von Aufhängungssystem das mit einem Vorderrad verbunden ist, wobei die Vorrichtung mindestens zwei Eindämmung Mittel (19, 22) des genannt Lenkstift (3) umfasst, die sich im Steuerrohr (2) bewegen können, um ihre gegenseitige Position zu ändern und so eine Änderung der Neigung der Lenkstiftachse (B) zu ermöglichen, und wobei die Vorrichtung außerdem Verriegelungsmittel (42) der oben genannten Eindämmung Mittel (19, 22) umfasst, **gekennzeichnet durch** die Tatsache, dass die Eindämmung Mittel (19, 22) ihre gegenseitige Position auf unendliche Weise und kontinuierlich ändern können, um die kontinuierliche Änderung der Neigung der Achse des Lenkstift (B) in unendlichen Werten zu ermöglichen, durch eine Abfolge einzelner Drehungen jedes der genannt Eindämmung Mittel (19, 22), oder durch eine Kombination solcher Drehungen, um Achsen (A, C), die nicht parallel zur Achse des Lenkstift (B) in dem Moment sind, in dem sie jeweils einzelne Rotation, oder deren Kombination, ausgeführt wird, wobei auch zu berücksichtigen ist, dass diese Drehungen in Bezug auf die Richtung übereinstimmend oder nicht übereinstimmend sein können.

2. Vorrichtung nach Anspruch 1, **gekennzeichnet durch** die Tatsache, dass die Achsen (A, C), um die Drehungen der genannt Eindämmung Mittel (19, 22) oder die Kombinationen dieser Drehungen erfolgen, die Achse (B) der Lenkstift (3) schneiden im gleichen Punkt (O).

3. Vorrichtung nach Anspruch 1 oder 2, **gekennzeichnet durch** die Tatsache, dass die Eindämmung Mittel (19, 22) innen hohle zylindrische Körper sind, die in das Steuerrohr (2) eingesetzt werden können, und dass die genannt Eindämmung Mittel ineinander angeordnet sind.

4. Vorrichtung nach Anspruch 3, **gekennzeichnet durch** die Tatsache, dass die Eindämmung Mittel (19, 22) an ihren Enden Flansche (19c, 19d, 22c, 22d) aufweisen und genannt Flansche so hergestellt sind, dass sie, wenn man sie einzeln betrachtet, die im ihnen erhaltenen Oberflächen (20, 21, 23, 24) haben eine Symmetrieachse, die geneigte der Symmetrieachse der Außenflächen der Flansche selbst und auch der Symmetrieachse des Eindämmung Mittel, in dem sich genannt Innenflächen ergeben gewonnen.

5. Vorrichtung nach Anspruch 3 oder 4, **gekennzeichnet durch** die Tatsache, dass das innerste Eindämmung Mittel (22) Sitze (23, 24) zur Aufnahme von mechanischen Entkopplungselementen (25, 26) aufweist, die eine freie Drehung des Lenkstift (3) ermöglichen, mit wobei die genannt Entkopplungssysteme durch Dichtelemente (27, 28) geschützt sind.

6. Vorrichtung nach einem der vorhergehenden Ansprüche, **gekennzeichnet durch** die Tatsache, dass verwendet Eindämmung Mittel (19, 22) sind zwei und dass mindestens eines der genannt Eindämmung Mittel aus zwei Teilen besteht, die für die Zusammenarbeit miteinander geeignet sind Integral bezüglich einer Rotationsbewegung.

7. Vorrichtung nach Anspruch 6, **gekennzeichnet durch** die Tatsache, dass die Flansche (19c, 19d) der äußeren Eindämmung Mittel (19) außen mit der Innenfläche des Steuerrohr (2) und innen mit den Außenflächen der Flansche (22c, 22d) zusammenwirken des inneren Eindämmung Mittel (22), wobei das genannt äußere Eindämmung Mittel eine Reihe von Aussparungen (46) umfasst, zur starren Verbindung mit den Verriegelungsmittel (42).

8. Vorrichtung nach Anspruch 7, **gekennzeichnet durch** die Tatsache, dass die Aussparungen (46) des äußeren Eindämmung Mittel (19) zur starren Verbindung dieses genannt Eindämmung Mittel mit einem Verriegelungsmittel (42) sind Gewindebohrung.

9. Vorrichtung nach einem der vorhergehenden Ansprüche 6 bis 8, **gekennzeichnet durch** die Tatsache, dass das innere Eindämmung Mittel (22) eine Bearbeitung (43) umfasst, zur Realisierung einer Formkopplung mit dem Verriegelungsmittel (42), eine Reihe von Aussparungen (50) für die Anwendung eines Werkzeugs zur Erleichterung einer Drehbewegung des genannt innere Eindämmung Mittel, und ein Messmittel (57) das zur Auswertung der genannt Drehung des genannt innere Eindämmung Mittel.

10. Vorrichtung nach Anspruch 9, **gekennzeichnet durch** die Tatsache, dass die Bearbeitung (43) zur Realisierung einer Formkopplung mit dem Verriegelungsmittel (42) eine Kerbzahnnaben-profile Verarbeitung ist, dass die Reihe von Aussparungen (50) für die Anwendung eines Werkzeugs zur Erleichterung einer Drehbewegung des innere Eindämmung Mittel aus Löchern aufgebaut ist und dass die Messmittel das zur Auswertung der genannt Drehung auswerten können, aus einer Skala (57) bestehen, wobei die genannt Skala mit einem Referenzelement (52) zusammenwirken kann, sich auf dem äußeren Eindämmung Mittel (19) befindet.

11. Vorrichtung nach einem der oben vorhergehenden Ansprüche, **gekennzeichnet durch** die Tatsache, dass das genannt Verriegelungsmittel (42) eine Reihe von Aussparungen (64) für eine starre Verbindung mit dem äußersten Eindämmung Mittel umfasst, eine interne Bearbeitung (43) zur Realisierung einer Formkopplung mit dem innersten Eindämmung Mittel (22), eine Reihe von Aussparungen (47) für die Anwendung eines Werkzeugs zur Erleichterung einer Drehbewegung des genannt Verriegelungsmittel, und ein Messmittel (60) das zur Auswertung der genannt Drehung des genannt Verriegelungsmittel (42).

12. Vorrichtung nach Anspruch 11, **gekennzeichnet durch** die Tatsache, dass die Reihe von Aussparungen (64) für die starre Verbindung mit dem äußersten Eindämmung Mittel (19) Löcher sind, die als Sitze für die Verbindungselemente (45) dienen, dass die interne Bearbeitung (43) zur Realisierung einer Formkopplung mit dem innersten Eindämmung Mittel (22) eine Kerbzahnnaben-profile Verarbeitung ist, dass die Reihe von Aussparungen (47) für die Anwendung eines Werkzeugs zur Erleichterung einer Drehbewegung des genannt Verriegelungsmittel aus Löchern aufgebaut ist und dass die Messmittel das zur Auswertung der genannt Drehung des genannt Verriegelungsmittel (42) eine Skala (60) ist, wobei die genannt Skala mit einem Referenzelement (55) zusammenwirken kann, das sich am Steuerrohr (2) befindet.

13. Vorrichtung nach Anspruch 12, **gekennzeichnet durch** die Tatsache, dass die Verbindungselemente (45) zwischen dem äußersten Eindämmung Mittel (19) und dem Verriegelungsmittel (42) Gewindeschrauben sind.

## Revendications

1. Dispositif de modification de l'inclinaison de l'axe de direction (B) d'un motocyclette ou similaire, ledit dispositif comprenant un pivot de direction (3) configuré pour être placé à l'intérieur d'un tube de direction (2) solidaire d'un châssis (1) de la motocyclette ou similaire, avec ledit dispositif pendant l'utilisation étant partie d'une unité de direction, ce dernier comprenant également un guidon lié pendant l'utilisation au pivot de direction (3), une platine supérieur de direction (4), une platine inférieur de direction (5) et tout type connu de système de suspension lié à une roue avant, dans lequel ledit dispositif comprend au moins deux moyens de confinement (19, 22) dudit pivot de direction (3) qui peuvent se déplacer dans le tube de direction (2) afin de varier leur position mutuelle permettant une variation de l'inclinaison de l'axe du pivot de direction (B), et dans lequel ledit dispositif comprend également des moyens de blocage (42) des moyens de confinement susmentionnés (19, 22), **caractérisé par le fait que** les moyens de confinement (19,22) peuvent varier leur position réciproque de façons infinies et avec continuité afin de permettre la variation continue en valeurs infinies de l'inclinaison de l'axe du pivot de direction (B) par une succession de . rotations simples de chacun desdits moyens de confinement (19, 22), ou par une combinaison de telles rotations, autour d'axes (A, C) qui ne sont pas parallèles à l'axe du pivot de direction (B) au moment où chaque rotation simple, ou leur combinaison, est effectuée, considérant en outre que lesdites rotations peuvent être en accord ou en désaccord entre elles en termes de sens.

2. Dispositif selon la revendication 1, **caractérisé en ce que** les axes (A, C), autour desquels se produisent les rotations desdits moyens de confinement (19, 22) ou les combinaisons desdites rotations, sont incidents à l'axe (B) du pivot de direction (3) en un même point (O).

3. Dispositif selon les revendications 1 ou 2, **caractérisé en ce que** les moyens de confinement (19, 22) sont des corps cylindriques creux intérieurement, aptes à être insérés à l'intérieur du tube de direction (2) et que lesdits moyens de confinement sont positionnés l'un dans l'autre.

4. Dispositif selon la revendication 3, **caractérisé en ce que** les moyens de confinement (19,22) ont des rebords (19c, 19d, 22c, 22d) à leurs extrémités, et lesdits rebords sont réalisés de telle manière que, en les considérant individuellement, les surfaces obtenues à l'intérieur (20, 21, 23, 24) ont un axe de symétrie incliné par rapport à l'axe de symétrie des surfaces externes des rebords eux-mêmes et également par rapport à l'axe de symétrie du moyen de confinement dans lesquels lesdites surfaces internes sont obtenues.

5. Dispositif selon les revendications 3 ou 4, **caractérisé en ce que** le moyen de confinement le plus interne (22) présente des sièges (23,24) pour loger des éléments de découplage mécanique (25,26) qui permettent au pivot de direction de tourner librement (3), lesdits systèmes de découplage étant protégés par des éléments d'étanchéité (27, 28).

6. Dispositif selon l'une quelconque des revendications précédentes, **caractérisé en ce que** les moyens de confinement utilisés sont au nombre de deux (19,22) et **en ce qu'**au moins l'un desdits moyens de confinement est réalisé en deux parties capables de coopérer l'une avec l'autre de manière à être solidaires par rapport à un mouvement de rotation.

7. Dispositif selon la revendication 6, **caractérisé en ce que** les rebords (19c, 19d) du moyen de confinement externe (19) coopèrent extérieurement avec la surface interne du tube de direction (2) et intérieurement avec les surfaces externes des rebords (22c, 22d) du moyen de confinement interne (22), avec ledit moyen de confinement externe comprenant une série d'évidage (46) aptes à réaliser une liaison rigide avec les moyens de blocage (42).

8. Dispositif selon la revendication 7, **caractérisé en ce que** les évidages (46) du moyen de confinement externe (19) pour la liaison rigide dudit moyen de confinement avec un moyen de blocage (42) consistent en des trous filetés.

9. Dispositif selon l'une quelconque des revendications 6 à 8, **caractérisé en ce que** le moyen de confinement interne (22) comprend un type d'usinage (43) pour le rendre apte à un couplage de forme avec un moyen de blocage (42), une série d'évidage (50) qui permettent l'application d'un outil apte à faciliter l'exécution d'un mouvement de rotation dudit moyen de confinement interne, et un moyen de mesure (57) apte à évaluer ledit mouvement de rotation dudit moyen de confinement interne.

10. Dispositif selon la revendication 9, **caractérisé en ce que** l'usinage apte à permettre un couplage de forme (43) avec un moyen de blocage (42) est un usinage mille raies, que la série d'évidage (50) pour l'application d'un outil apte à faciliter un mouvement de rotation du moyen de confinement interne est constituée de trous et que le moyen de mesure apte à évaluer cette rotation est constitué par une échelle graduée (57), ladite échelle graduée étant apte à coopérer avec un élément de référence (52) situé sur le moyen de confinement externe (19).

11. Dispositif selon l'une quelconque des revendications précédentes, **caractérisé en ce que** ledit moyen de blocage (42) comprend une série d'évidage (64) pour une liaison rigide avec le moyen de confinement le plus externe, un usinage interne (43) apte à réaliser un couplage de forme avec le moyen de confinement le plus interne (22), une série d'évidage (47) pour l'application d'un outil apte à faciliter l'exécution d'un mouvement de rotation dudit moyen de blocage, et un moyen de mesure (60) apte à l'évaluation de ladite rotation dudit moyen de blocage (42).

12. Dispositif selon la revendication 11, **caractérisé en ce que** la série d'évidage (64) pour la liaison rigide avec le moyen de confinement le plus externe (19) sont des trous servant de sièges aux éléments de liaison (45), que l'usinage interne (43) pour permettre le couplage de forme avec le moyen de confinement les plus interne (22) est un usinage mille raies, que la série d'évidage (47) pour l'application de l'outil apte à faciliter la rotation dudit moyen de ; blocage est constituée de trous, et que le moyen de mesure de ladite rotation dudit moyen de blocage (42) est une échelle graduée (60), ladite échelle graduée étant apte à coopérer avec un élément de référence (55) situé sur le tube de direction (2).

13. Dispositif selon la revendication 12, **caractérisé en ce que** les éléments de liaison (45) entre le moyen de confinement le plus externe (19) et le moyen de blocage (42) sont des vis filetées.
